# EUROPEAN PATENT SPECIFICATION

(11) **EP 3 125 680 B1**
(45) Date of publication and mention of the grant of the patent: **24.04.2019**
(21) Application number: 15717684.3
(22) Date of filing: 31.03.2015
(51) Int. Cl.: A01J 9/00, B65D 90/34

(54) **BULK MILK TANK**
MILCHTANK
RÉSERVOIR À LAIT

(30) Priority: 03.04.2014 SE 1450401
(43) Date of publication of application: 08.02.2017
(73) Proprietor: DeLaval Holding AB, 147 21 Tumba (SE)
(72) Inventor: TRZNADEL, Jaroslaw, S-147 21 Tumba (SE)
(74) Representative: Lilliehorn, Tobias
(86) International application number: PCT/SE2015/050399
(87) International publication number: WO 2015/152811

(56) References cited:
- DE-A1- 4 031 833
- DE-A1-102006 050 809
- DE-A1-102007 000 076
- EA-A1- 201 001 612
- FR-A1- 2 669 902
- NZ-A- 538 397
- UA-A- 30 283
- UA-U- 24 719

## Description

### TECHNICAL FIELD

The present invention relates to a bulk milk tank, in particular a bulk milk tank for on-farm milk storage.

### BACKGROUND

A bulk milk tank has to be ventilated in order for air to pass out of the milk tank when the milk tank is filled with milk or when the milk tank is being cleaned, as well as for introducing air into the bulk milk tank when milk is emptied from the bulk milk tank.

FR 2669902 discloses a breathing apparatus for sealed tanks comprising first and second valves which open when the pressure in the tank is higher and lower respectively than the ambient pressure. In order to provide a connection rapidly between the inside of the tank and the exterior, and to allow gaseous exchanges at a high flow rate, one of the valves is controlled by the pressure of the fluid feeding a cleaning device of the tank.

FR 2988081 discloses a device especially intended to provide partial closure of a vent means of a milk tank, which not only prevents dust from entering the milk tank and allows the air out during filling, but which also avoids the flow of washing liquid onto outer walls of the tank, and which promotes the evacuation of the liquid out of the vent in the form of steam.

The device also protects against outside access into the tank through the vent.

NZ 538 397 A discloses a bulk milk tank with a venting device.

Some types of milk tanks are placed outdoors close to a building. Conduit connections to such a milk tank and access to an interior of the milk tank may for safety reasons only be arranged from the building. When this safety reasoning is applied also to ventilation of the milk tank, a ventilation conduit to/from the milk tank should also extend into the building. In practice this entails that the ventilation conduit extends from a top of the milk tank into the building at a level of a bottom portion of the milk tank. The extension from the top to the bottom portion may be a distance of several metres, i.e. a considerable difference in height between the two openings of the ventilation conduit.

If such a ventilation conduit by accident should be filled with a liquid, e.g. if the milk tank should be overfilled with milk such that milk overflows through the ventilation conduit, a siphon is formed by the ventilation conduit. The static pressure head created by the liquid column in the ventilation conduit and corresponding to the height difference between the highest point of the milk tank (or of the ventilation conduit) and the outlet of the ventilation conduit causes milk to flow out of the milk tank via the ventilation conduit. Thus, milk is lost via the ventilation conduit. Moreover, if a milk inlet to the milk tank is closed and the milk continues to flow through the ventilation conduit driven by the pressure head, a negative pressure may build up inside the milk tank. The negative pressure may cause the milk tank to implode because a bulk milk tank generally it is not designed to withstand any significant negative pressure.

### SUMMARY

It is an object of the present invention to provide a bulk milk tank which avoids the above discussed problem.

According to the invention, the object is achieved by a bulk milk tank comprising a housing forming a storage space and comprising a milk inlet connected to the storage space adapted for introducing milk into the storage space, and a ventilation conduit forming a first ventilation passage connected to an upper portion of the storage space and extending from the upper portion of the storage space to a level below the upper portion of the storage space. The bulk milk tank comprises a second ventilation passage adapted to admit air into the upper portion of the storage space, wherein the second ventilation passage is connected to the upper portion of the storage space.

Since there is provided a second ventilation passage through which air may be admitted into the upper portion of the storage space in case the first ventilation passage should accidentally be filled with milk, there is no risk of any significant negative pressure build-up in the storage space. As a result, the above mentioned object is achieved.

The bulk milk tank may be adapted for on-farm storage of milk prior to collection of the milk in the bulk milk tank by a milk truck. The bulk milk tank may be provided with a cooling element for cooling the milk stored in the bulk tank. Alternatively, the milk may be cooled prior to being introduced into the storage space, the storage space being thoroughly insulated.

The housing of the bulk milk tank may be insulated. The bulk milk tank may be arranged in a building or outside a building. In the latter case access to the storage space and connections to the storage space may be provided only from a building adjacent to the bulk milk tank.

That is, access to the milk inlet, the first ventilation passage, the second ventilation passage, and a manhole (if present) of the bulk milk tank may be provided only from the building adjacent to the bulk milk tank. Suitably, the building or a relevant portion thereof may be locked to prevent unauthorised access to an interior of the bulk milk tank, i.e. to the storage space.

According to the invention the bulk milk tank comprises an arrangement for preventing the second ventilation passage from being filled with milk.

According to embodiments the bulk milk tank may comprise a further ventilation conduit extending from the ventilation conduit, or the upper portion of the storage space. The second ventilation passage may extend through the further ventilation conduit.

According to embodiments the arrangement for preventing the second ventilation passage from being filled with milk may comprise a portion of the further ventilation conduit extending to a level higher than a highest point of the first ventilation passage. In this manner the risk of milk flowing out of the storage space via the second ventilation passage may be considerably reduced.

According to embodiments the portion of the further ventilation conduit may extend to a level of at least 15 cm higher than the highest point of the first ventilation passage. According to some embodiments the further ventilation conduit may extend to a level of at least 1 metre higher than the highest point of the first ventilation passage, or alternatively to a level of at least 2 metres higher than the highest point of the first ventilation passage.

According to embodiments the arrangement for preventing the second ventilation passage from being filled with milk may comprise a check valve arranged in the further ventilation conduit.

According to embodiments the further ventilation conduit may extend to a level below the upper portion of the storage space. In this manner the further ventilation conduit may for instance extend into a building next to the bulk milk tank.

According to embodiments the further ventilation conduit may extend to a level of a lower portion of the bulk milk tank. In this manner an end portion of the further ventilation conduit may easily be accessed by service personnel.

According to embodiments at least a portion of the further ventilation conduit may be adapted to extend into a building arranged next to the bulk milk tank.

According to embodiments the ventilation conduit may comprise a first conduit portion having a first cross-section area and a second conduit portion having a second cross-section area, the first conduit portion being arranged closer to the upper portion of the storage space than the second conduit portion and the first cross-section area being smaller than the second cross section area, wherein the second ventilation passage may extend through the second conduit portion together with the first ventilation passage. In this manner the first and second ventilation passages may be provided in the ventilation conduit. In these embodiments there is no further ventilation conduit required.

According to embodiments the arrangement for preventing the second ventilation passage from being filled with milk comprises a portion of the ventilation conduit comprising a transition from the first cross-section area to the second cross-section area, which provides a cross-section area increase of the ventilation conduit.

According to embodiments the housing may have a greater height than any dimension in the horizontal plane. In this manner a small footprint bulk milk tank may be provided.

According to embodiments the ventilation conduit may extend to a level of a lower portion of the bulk milk tank. In this manner an end portion of the ventilation conduit may easily be accessed by service personnel.

According to embodiments at least a portion of the ventilation conduit may be adapted to extend into a building arranged next to the bulk milk tank.

Further features of, and advantages with, the present invention will become apparent when studying the appended claims and the following detailed description.

### BRIEF DESCRIPTION OF THE DRAWINGS

Various aspects of the invention, including its particular features and advantages, will be readily understood from the example embodiments discussed in the following detailed description and the accompanying drawings, in which:
Figs. 1 - 3 schematically illustrate bulk milk tanks according to embodiments, and
Fig. 4 schematically illustrates an upper end portion of a bulk milk tank according to embodiments.

### DETAILED DESCRIPTION

Aspects of the present invention will now be described more fully. Like numbers refer to like elements throughout. Well-known functions or constructions will not necessarily be described in detail for brevity and/or clarity.

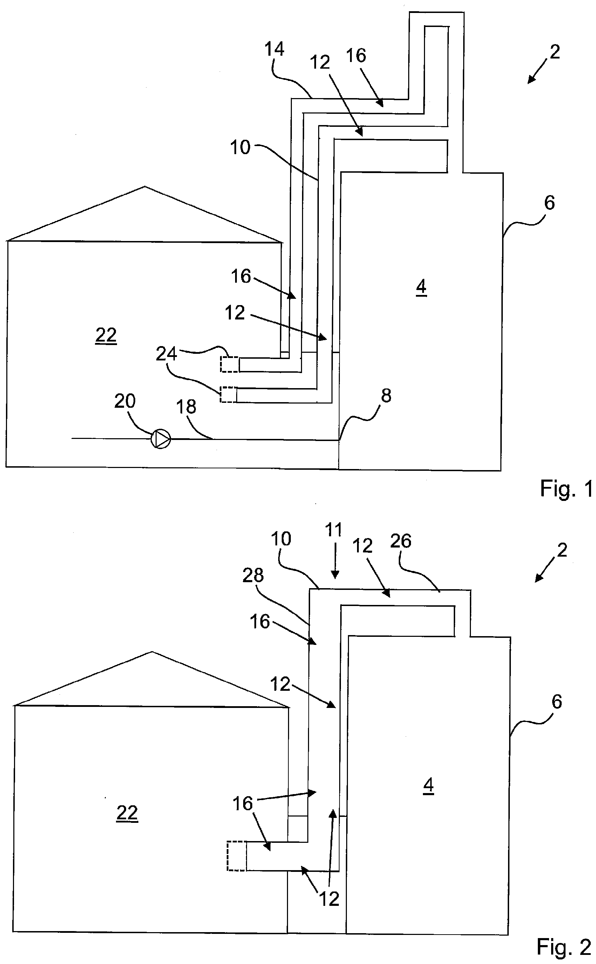

**Fig. 1** schematically illustrates a bulk milk tank 2 according to embodiments. The bulk milk tank 2 forms a storage space 4 for milk. More specifically a housing 6 of the bulk milk tank 2 forms the storage space 4. The bulk milk tank 2 comprises a milk inlet 8 connected to the storage space 4, a ventilation conduit 10 comprising a first ventilation passage 12 connected to an upper portion of the storage space 4, and a further ventilation conduit 14 comprising a second ventilation passage 16. The storage space 4 is ventilated via the first and second ventilation passages 12, 16, i.e. air is let out and in through the first and second ventilation passages 12, 16 when the storage space 4 is filled with milk and emptied of milk. The further ventilation conduit 14 extends from the ventilation conduit 10 to a level higher than a highest point of the first ventilation passage 12. Thus, the second ventilation passage 16 is adapted to admit air into the first ventilation passage 12. In alternative (non-shown) embodiments the further ventilation conduit 14 may instead extend directly from the upper portion of the storage space 4 to a level higher than a highest point of the first ventilation passage 12. Thus, the second ventilation passage 16 is adapted to admit air into the upper portion of the storage space 4. In both alternatives an arrangement for preventing the second ventilation passage 16 from being filled with milk comprises a portion of the further ventilation conduit 14 extending to a level higher than a highest point of the first ventilation passage 12. A milk conduit 18 comprising a milk pump 20 extends from a non-shown milking facility to the milk inlet 8. Through the milk inlet 8 milk is introduced into the storage space 4. The milk pump 20 pumps milk into the storage space 4 and is dimensioned to be able to pump milk to the upper portion of the storage space 4, i.e. to overcome the pressure head formed by the milk in the storage space 4. A valve may be provided in the milk conduit 18.

The bulk milk tank 2 is arranged outside and adjacent to a building 22. A portion of the ventilation conduit 10 and a portion of the further ventilation conduit 14 extend into the building 22. Access to the milk inlet 8, and end portions of the first and second ventilation passages 12, 16, is provided only via the building 22. The ventilation conduit 10 extends from the upper portion of the storage space 4 to a level below the upper portion of the storage space 4, more specifically to a level of a lower portion of the bulk milk tank 2. The second ventilation passage 16 extends at least along a portion of the first ventilation passage 12 by the further ventilation conduit 14 extending along the ventilation conduit 10. Also the further ventilation conduit 14 extends to a level below the upper portion of the storage space 4 in the building 22, more specifically to a level of a lower portion of the bulk milk tank 4. Openings at the end portions of the ventilation conduit 10 and the further ventilation conduit 14 may be provided with protective members 24 adapted to admit air into and out of the first and second ventilation passages 12, 16 but to prevent dirt and insects from accessing the first and second ventilation passages 12, 16 and the storage space 4. The level at the lower portion of the bulk milk tank 4 may suitably be a level which is comfortably reachable by service personnel.

In case a milk level should reach the upper portion of the storage space 4 and the first ventilation passage 12 in the ventilation conduit 10 and risk forming a siphon in the ventilation conduit 10, the second ventilation passage 16 in the further ventilation conduit 14 will prevent this by admitting air into the ventilation conduit 10. Milk will only flow through the first ventilation passage 12 as long as milk is pumped into the storage space 4. As the milk pump 20 is stopped and the milk conduit 18 is closed, the air admitted via the second ventilation passage 16 will permit emptying of the first ventilation passage 12. Thus, the housing 6 of the bulk milk tank 2 will not risk imploding. If instead the further ventilation conduit 14 and the second ventilation passage 16 are connected to the upper portion of the storage space 4, air is admitted into the first ventilation passage 12 via the upper portion of the storage space 4 to permit emptying of the first ventilation passage 12.

According to embodiments the further ventilation conduit may have a cross section area of at least 75 cm2.

According to embodiments the ventilation conduit may have a cross-section area of at least 160 cm2.

The housing 6 has a greater height than any dimension in the horizontal plane. Typically the housing 6 may have a substantially circular cross-section, in which case the diameter of the housing 6 may be smaller than its height.

**Fig. 2** schematically illustrates a bulk milk tank 2 according to embodiments. The main differences as compared with the embodiments illustrated in Fig. 1 will be discussed in the following. The bulk milk tank 2 comprises a ventilation conduit 10 comprising a first conduit portion 26 having a first cross-section area and a second conduit portion 28 having a second cross-section area. Again, the ventilation conduit 10 extends from an upper portion of the storage space 4 to a level below the upper portion of the storage space 4 and to a level of a lower portion of the bulk milk tank 2 in a building 22.

The first conduit portion 26 is arranged closer to the upper portion of the storage space 4 than the second conduit portion 28. The first cross-section area is smaller than the second cross section area. A first ventilation passage 12 extends through the first and second conduit portions 26, 28. A second ventilation passage 16 extends through the second conduit portion 28. In this manner the first and second ventilation passages 12, 16 may be provided in the ventilation conduit 10. An arrangement for preventing the second ventilation passage 16 from being filled with milk comprises a portion 11 of the ventilation conduit 10 comprising a transition from the first cross-section area to the second cross-section area, which thus provides a cross-section area increase of the ventilation conduit 10.

In case a milk level should reach the upper portion of the storage space 4 and the first conduit portion 26 of the ventilation conduit 10 and risk forming a siphon in the ventilation conduit 10, the second ventilation passage 16 in the larger cross-section second conduit portion 28 will prevent this by admitting air into the ventilation conduit 10. Since a liquid, in this case milk, is incompressible, the smaller cross-section of the first conduit portion 26 restricts the flow of milk through the entire ventilation conduit 10. That is, at the portion 11 of the ventilation conduit 10 comprising the transition from the first cross-section area to the second cross-section area, the milk flow restricted by the first conduit portion 26 no longer fills out the entire ventilation conduit 10. Instead air fills up the volume of the second conduit portion 28, through which milk does not flow. Thus, the second ventilation passage 16 in the ventilation conduit 10 is formed by that portion of the second conduit portion 28 which in this manner is filled with air and communicates with the end of the ventilation conduit 10 at the lower portion of the bulk milk tank 2 in the building 22.

Thus again, as milk is no longer pumped into the storage space 4, the air admitted via the second ventilation passage 16 will permit emptying of the first ventilation passage 12, and the housing 6 of the bulk milk tank 2 will not risk imploding. Suitably, the portion 11 of the ventilation conduit 10 comprising the transition from the first cross-section area to the second cross-section area may be arranged at a highest point of the ventilation conduit 10 or in a region of the upper portion of the storage space 4. It may be noted that the farther down along the storage space 4 the portion 11 of the ventilation conduit 10 comprising the transition from the first cross-section area to the second cross-section area is arranged, the larger a pressure head may form in the first conduit portion 26 and subject the storage space 4 to a negative pressure in case a siphon should form in the ventilation conduit 10. Suitably, the second conduit portion 28 may extend from the portion 11 of the ventilation conduit 10 comprising the transition from the first cross-section area to the second cross-section area to an end of the ventilation conduit 10 at the lower portion of the bulk milk tank 2 in the building 22.

According to embodiments the second cross-section area may be at least twice the size of the first cross-section area.

According to embodiments, the first cross-section area may be at least 160 cm2.

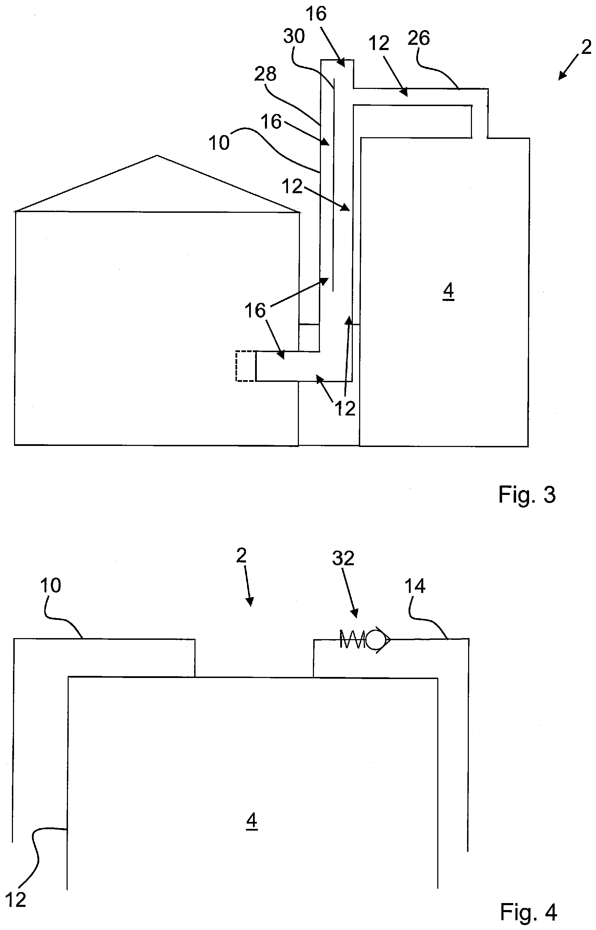

**Fig. 3** schematically illustrates a bulk milk tank 2 according to embodiments. These embodiments resemble the embodiments of Fig. 2. Again, the bulk milk tank 2 comprises a ventilation conduit 10 comprising a first conduit portion 26 having a first cross-section area and a second conduit portion 28 having a second cross-section area. The first conduit portion 26 is arranged closer to the upper portion of the storage space 4 than the second conduit portion 28. The first cross-section area is smaller than the second cross section area. A first ventilation passage 12 extends through the first and second conduit portions 26, 28. A second ventilation passage 16 extends through the second conduit portion 28 together with the first ventilation passage 12.

The main difference as compared with the embodiments illustrated in Fig. 2 is that in these embodiments there is provided a partition 30 in at least a portion of the second conduit portion 28. In this manner the first ventilation passage 12 may be provided on one side of the partition 30 and the second ventilation passage 16 may be provided on an opposite side of the partition 30.

As illustrated, the second ventilation passage 16 may extend to a level higher than a highest point of the first ventilation passage 12.

**Fig. 4** schematically illustrates an upper end portion of a bulk milk tank 2 according to embodiments. These embodiments resemble the embodiments of Fig. 1. The main differences as compared with the embodiments illustrated in Fig. 1 will be discussed in the following. A ventilation conduit 10 comprising a first ventilation passage is connected to an upper portion of a storage space 4 of the bulk milk tank 2. A further ventilation conduit 14 comprising a second ventilation passage is connected to the upper portion of the storage space 4. A check valve 32 is provided in the further ventilation conduit 14. The check valve 32 opens in a flow direction towards the storage space 4. The check valve 32 may be biased towards its closed position, as indicated by the check valve symbol in Fig. 4.

The storage space 4 is ventilated via the first ventilation passage in the ventilation conduit 10. In case a milk level should reach the upper portion of the storage space 4 and the ventilation conduit 10, a siphon may form. If so, as milk flows through the first ventilation passage in the ventilation conduit 10, a negative pressure builds up in the storage space 4. The negative pressure will cause the check valve 32 to open and air will be admitted into the storage space 4 through the second ventilation passage in the further ventilation conduit 14. The admitted air will cause the siphon to cease. Suitably, if the check valve 32 is biased, it may have an opening pressure of just below atmospheric pressure to prevent implosion of the housing 6 of the bulk milk tank 2.

In these embodiments the further ventilation conduit 14 need not extend to a level higher than a highest point of the first ventilation passage since the check valve 32 forms an arrangement for preventing the second ventilation passage 16 from being filled with milk.

This disclosure should not be construed as limited to the embodiments set forth herein. A person skilled in the art will realize that different features of the embodiments disclosed herein may be combined to create embodiments other than those described herein, without departing from the scope of the present disclosure.

Therefore, it is to be understood that the foregoing is illustrative of various example embodiments and that the invention is defined only by the appended claims.

As used herein, the term "comprising" or "comprises" is open-ended, and includes one or more stated features, elements, steps, components or functions but does not preclude the presence or addition of one or more other features, elements, steps, components, functions or groups thereof.

## Claims

1. A bulk milk tank (2) comprising a housing (6) forming a storage space (4), a milk inlet (8) connected to the storage space (4) adapted for introducing milk into the storage space (4), and a ventilation conduit (10) forming a first ventilation passage (12) connected to an upper portion of the storage space (4) and extending from the upper portion of the storage space (4) to a level below the upper portion of the storage space (4),
wherein the bulk milk tank (2) comprises a second ventilation passage (16) adapted to admit air into the upper portion of the storage space (4), wherein the second ventilation passage (16) is connected to the upper portion of the storage space (4), and
an arrangement for preventing the second ventilation passage (16) from being filled with milk.

2. The bulk milk tank (2) according to claim 1, comprising a further ventilation conduit (14) extending from the ventilation conduit (10), or the upper portion of the storage space (4), wherein the second ventilation passage (16) extends through the further ventilation conduit (14).

3. The bulk milk tank (2) according to claim 2, wherein the arrangement for preventing the second ventilation passage (16) from being filled with milk comprises a portion of the further ventilation conduit (14) extending to a level higher than a highest point of the first ventilation passage (12).

4. The bulk milk tank (2) according to claim 3, wherein the portion of the further ventilation conduit (14) extends to a level of at least 15 cm higher than the highest point of the first ventilation passage (12).

5. The bulk milk tank (2) according to claim 2, wherein the arrangement for preventing the second ventilation passage (16) from being filled with milk comprises a check valve arranged in the further ventilation conduit (14).

6. The bulk milk tank (2) according to any one of claims 2 - 5, wherein the further ventilation conduit (14) extends to a level below the upper portion of the storage space (4).

7. The bulk milk tank (2) according to any one of claims 2 - 6, wherein the further ventilation conduit (14) extends to a level of a lower portion of the bulk milk tank (2).

8. The bulk milk tank according to any one of claims 2 - 7, wherein at least a portion of the further ventilation conduit (14) is adapted to extend into a building (22) arranged next to the bulk milk tank (2).

9. The bulk milk tank (2) according to claim 1, wherein the ventilation conduit (10) comprises a first conduit portion (26) having a first cross-section area and a second conduit portion (28) having a second cross-section area, the first conduit portion (26) being arranged closer to the upper portion of the storage space (4) than the second conduit portion (28) and the first cross-section area being smaller than the second cross section area, and wherein the second ventilation passage (16) extends through the second conduit portion (28) together with the first ventilation passage (12).

10. The bulk milk tank (2) according to claim 9, wherein the arrangement for preventing the second ventilation passage (16) from being filled with milk comprises a portion (11) of the ventilation conduit (10) comprising a transition from the first cross-section area to the second cross-section area, which provides a cross-section area increase of the ventilation conduit (10).

11. The bulk milk tank (2) according to claim 9 or 10, wherein the second cross-section area is at least twice the size of the first cross-section area.

12. The bulk milk tank (2) according to any one of the preceding claims, wherein the housing (6) has a greater height than any dimension in the horizontal plane.

13. The bulk milk tank (2) according to any one of the preceding claims, wherein the ventilation conduit (10) extends to a level of a lower portion of the bulk milk tank (2).

14. The bulk milk tank (2) according to any one of the preceding claims, wherein at least a portion of the ventilation conduit (10) is adapted to extend into a building (22) arranged next to the bulk milk tank (2).

## Patentansprüche

1. Milchsammeltank (2), umfassend ein Gehäuse (6), das einen Lagerraum (4) bildet, einen mit dem Lagerraum (4) verbundenen Milcheinlass (8), der dazu ausgebildet ist, Milch in den Lagerraum (4) einzubringen, und einen Lüftungskanal (10), der einen mit einem oberen Abschnitt des Lagerraums (4) verbundenen ersten Lüftungsdurchlass (12) ausbildet und sich von dem oberen Abschnitt des Lagerraums (4) zu einer Ebene unterhalb des oberen Abschnitts des Lagerraums (4) erstreckt,
wobei der Milchsammeltank (2) einen zweiten Lüftungsdurchlass (16) umfasst, der dazu ausgebildet ist, Luft in den oberen Abschnitt des Lagerraums (4) strömen zu lassen, wobei der zweite Lüftungsdurchlass (16) mit dem oberen Abschnitt des Lagerraums (4) verbunden ist, **gekennzeichnet durch**
eine Anordnung zum Verhindern, dass der zweite Lüftungsdurchlass (16) mit Milch gefüllt wird.

2. Milchsammeltank (2) nach Anspruch 1, umfassend einen weiteren Lüftungskanal (14), der sich von dem Lüftungskanal (10) oder dem oberen Abschnitt des Lagerraums (4) erstreckt, wobei sich der zweite Lüftungsdurchlass (16) durch den weiteren Lüftungskanal (14) erstreckt.

3. Milchsammeltank (2) nach Anspruch 2, wobei die Anordnung zum Verhindern, dass der zweite Lüftungsdurchlass (16) mit Milch gefüllt wird, einen Abschnitt des weiteren Lüftungskanals (14) umfasst, der sich auf eine Ebene erstreckt, die höher liegt als ein höchster Punkt des ersten Lüftungsdurchlasses (12).

4. Milchsammeltank (2) nach Anspruch 3, wobei sich der Abschnitt des weiteren Lüftungskanals (14) auf eine Ebene erstreckt, die mindestens 15 cm höher liegt als der höchste Punkt des ersten Lüftungsdurchlasses (12).

5. Milchsammeltank (2) nach Anspruch 2, wobei die Anordnung zum Verhindern, dass der zweite Lüftungsdurchlass (16) mit Milch gefüllt wird, ein in dem weiteren Lüftungskanal (14) angeordnetes Rückschlagventil umfasst.

6. Milchsammeltank (2) nach einem der Ansprüche 2 - 5, wobei sich der weitere Lüftungskanal (14) auf eine Ebene unterhalb des oberen Abschnitts des Lagerraums (4) erstreckt.

7. Milchsammeltank (2) nach einem der Ansprüche 2 - 6, wobei sich der weitere Lüftungskanal (14) auf eine Ebene eines unteren Abschnitts des Milchsammeltanks (2) erstreckt.

8. Milchsammeltank nach einem der Ansprüche 2 - 7, wobei mindestens ein Abschnitt des weiteren Lüftungskanals (14) dazu ausgebildet ist, sich in ein neben dem Milchsammeltank (2) angeordnetes Gebäude (22) zu erstrecken.

9. Milchsammeltank (2) nach Anspruch 1, wobei der Lüftungskanal (10) einen ersten Kanalabschnitt (26) mit einer ersten Querschnittsfläche und einen zweiten Kanalabschnitt (28) mit einer zweiten Querschnittsfläche umfasst, wobei der erste Kanalabschnitt (26) näher an dem oberen Abschnitt des Lagerraums (4) angeordnet ist als der zweite Kanalabschnitt (28) und die erste Querschnittsfläche kleiner ist als die zweite Querschnittsfläche, und wobei sich der zweite Lüftungsdurchlass (16) gemeinsam mit dem ersten Lüftungsdurchlass (12) durch den zweiten Kanalabschnitt (28) erstreckt.

10. Milchsammeltank (2) nach Anspruch 9, wobei die Anordnung zum Verhindern, dass der zweite Lüftungsdurchlass (16) mit Milch gefüllt wird, einen Abschnitt (11) des Lüftungskanals (10) umfasst, der einen Übergang von der ersten Querschnittsfläche zu der zweiten Querschnittsfläche umfasst, wodurch eine Querschnittsflächenerhöhung des Lüftungskanals (10) bereitgestellt wird.

11. Milchsammeltank (2) nach Anspruch 9 oder 10, wobei die zweite Querschnittsfläche mindestens doppelt so groß ist wie die erste Querschnittsfläche.

12. Milchsammeltank (2) nach einem der vorstehenden Ansprüche, wobei das Gehäuse (6) eine größere Höhe aufweist, als jede andere Abmessung in der Waagerechten.

13. Milchsammeltank (2) nach einem der vorstehenden Ansprüche, wobei sich der Lüftungskanal (10) auf eine Ebene eines unteren Abschnitts des Milchsammeltanks (2) erstreckt.

14. Milchsammeltank (2) nach einem der vorstehenden Ansprüche, wobei mindestens ein Abschnitt des Lüftungskanals (10) dazu ausgebildet ist, sich in ein neben dem Milchsammeltank (2) angeordnetes Gebäude (22) zu erstrecken.

## Revendications

1. Réservoir à lait (2) comprenant un boîtier (6) formant un espace de stockage (4), une entrée de lait (8) reliée à l'espace de stockage (4) et conçue pour acheminer le lait jusque dans l'espace de stockage (4), et un conduit de ventilation (10) formant un premier passage de ventilation (12), relié à une partie supérieure de l'espace de stockage (4) et s'étendant depuis la partie supérieure de l'espace de stockage (4), jusqu'à un niveau situé au-dessous de la partie supérieure de l'espace de stockage (4),
le réservoir à lait (2) comprenant un second passage de ventilation (16), conçu pour permettre l'admission d'air dans la partie supérieure de l'espace de stockage (4), le second passage de ventilation (16) étant relié à la partie supérieure de l'espace de stockage (4), **caractérisé en ce qu'**un dispositif est conçu pour empêcher que le second passage de ventilation (16) ne soit rempli de lait.

2. Réservoir à lait (2) selon la revendication 1, comprenant un autre conduit de ventilation (14) s'étendant à partir du conduit de ventilation (10) ou de la partie supérieure de l'espace de stockage (4), le second passage de ventilation (16) s'étendant dans l'autre conduit de ventilation (14).

3. Réservoir à lait (2) selon la revendication 2, dans lequel le dispositif conçu pour empêcher que le second passage de ventilation (16) ne soit rempli de lait comprend une partie de l'autre conduit de ventilation (14) s'étendant d'un niveau supérieur à un point le plus élevé du premier passage de ventilation (12).

4. Réservoir à lait (2) selon la revendication 3, dans lequel la partie de l'autre conduit de ventilation (14) s'étend jusqu'à un niveau se situant à au moins 15 cm plus haut que le point le plus élevé du premier passage de ventilation (12).

5. Réservoir à lait (2) selon la revendication 2, dans lequel le dispositif conçu pour empêcher que le second passage de ventilation (16) ne soit rempli de lait comprend un clapet de retenue disposé dans l'autre conduit de ventilation (14).

6. Réservoir à lait (2) selon l'une quelconque des revendications 2 à 5, dans lequel l'autre conduit de ventilation (14) s'étend jusqu'à un niveau situé au-dessous de la partie supérieure de l'espace de stockage (4).

7. Réservoir à lait (2) selon l'une quelconque des revendications 2 à 6, dans lequel l'autre conduit de ventilation (14) s'étend jusqu'à un niveau d'une partie inférieure du réservoir à lait (2).

8. Réservoir à lait selon l'une quelconque des revendications 2 à 7, dans lequel au moins une partie de l'autre conduit de ventilation (14) est conçue pour s'étendre dans un bâtiment (22) situé à proximité du réservoir à lait (2).

9. Réservoir à lait (2) selon la revendication 1, dans lequel le conduit de ventilation (10) comprend une première partie de conduit (26) ayant une première zone de section transversale et une seconde partie de conduit (28) ayant une seconde zone de section transversale, la première partie de conduit (26) étant située plus près de la partie supérieure de l'espace de stockage (4) que la seconde partie de conduit (28) et la première zone de section transversale étant plus petite que la seconde zone de section transversale, le second passage de ventilation (16) s'étendant dans la seconde partie de conduit (28) conjointement avec le premier passage de ventilation (12).

10. Réservoir à lait (2) selon la revendication 9, dans lequel le dispositif conçu pour empêcher que le second passage de ventilation (16) ne soit rempli de lait comprend une partie (11) du conduit de ventilation (10) comprenant une transition de la première zone de section transversale à la seconde zone de section transversale, de manière à permettre une augmentation de la zone de section transversale du conduit de ventilation (10).

11. Réservoir à lait (2) selon la revendication 9 ou 10, dans lequel la seconde zone de section transversale vaut au moins deux fois la taille de la première zone de section transversale.

12. Réservoir à lait (2) selon l'une quelconque des revendications précédentes, dans lequel le boîtier (6) présente une hauteur supérieure à toute dimension relevée dans le plan horizontal.

13. Réservoir à lait (2) selon l'une quelconque des revendications précédentes, dans lequel le conduit de ventilation (10) s'étend jusqu'à un niveau d'une partie inférieure du réservoir à lait (2).

14. Réservoir à lait (2) selon l'une quelconque des revendications précédentes, dans lequel au moins une partie du conduit de ventilation (10) est conçue pour s'étendre jusque dans un bâtiment (22) situé à proximité du réservoir à lait (2).
